## Europäisches Patentamt
## European Patent Office
## Office européen des brevets

(19)

(11) Numéro de publication: **0 131 489**
**B1**

(12) # FASCICULE DE BREVET EUROPÉEN

(45) Date de publication du fascicule du brevet:
24.09.86

(51) Int. Cl.⁴: **E 05 F 15/10,** H 02 P 7/00

(21) Numéro de dépôt: 84401177.5

(22) Date de dépôt: 06.06.84

(54) **Circuit de commande du moteur d'un panneau ouvrant de véhicule automobile, notamment pour lève-vitre électrique.**

(30) Priorité: 04.07.83 FR 8311090

(43) Date de publication de la demande:
16.01.85 Bulletin 85/3

(45) Mention de la délivrance du brevet:
24.09.86 Bulletin 86/39

(84) Etats contractants désignés:
DE GB IT SE

(56) Documents cité:
FR-A-2 415 711
FR-A-2 465 061
FR-A-2 484 168

(73) Titulaire: **ACIERS ET OUTILLAGE PEUGEOT
Société dite:, F-25400 Audincourt (Doubs) (FR)**

(72) Inventeur: **Petrequin, Claude, Rue Hector Berlioz,
F-25700 Valentigney (FR)**
Inventeur: **Rudi, Alain, 2 Rue Collin Essert, F-90000
Belfort (FR)**

(74) Mandataire: **Lavoix, Jean, c/o Cabinet Lavoix 2,
Place D'Estienne D'Orves, F-75441 Paris Cedex 09
(FR)**

LIBER, STOCKHOLM 1986

## Description

La présente invention concerne un circuit de commande pour moteur d'entraînement d'un panneau ouvrant pour véhicule automobile tel qu'une vitre ou un toit ouvrant. Dans la demande de brevet français n° 83 08 856 du 27 Mai 1983, publiée le 30.11.84 sous le Nr. 2546 584, on a décrit un circuit de commande de ce type dans lequel sont prévus des moyens de commutation accessibles dans l'habitacle du véhicule et comprenant, pour chaque sens de marche du moteur, un premier organe de commande permettant de déclencher un cycle automatique et un second organe de commande indépendant du premier et permettant de brancher directement le moteur d'entraînement du panneau sur une source d' alimentation. Le FR-A-2415 711 décrit un circuit de commande du même type dont le circuit du cycle automatique comporte des moyens de mémoire.

L'invention à pour but de fournir un tel circuit de commande, perfectionné par rapport à celui décrit dans les brevets sus-indiqués grâce notamment à l'établissement d'une priorité concernant les deux organes de commande affectés à chaque sens du moteur.

L'invention a donc pour objet un circuit de commande du moteur d'entrainement d ' un panneau ouvrant pour véhicule automobile tel qu'une vitre ou un toit ouvrant du type comprenant respectivement pour chaque sens de marche du moteur, en vue de l 'ouverture ou de la fermeture du panneau, deux organes de commutation dont le premier est destiné à la commande d'un cycle automatique de marche couvrant normalement la course totale du panneau et dont le second est destiné à la commande d'un cycle manuel permettant de placer sélectivement le panneau dans une position quelconque de sa course en fonction de la durée d'actionnement du second organe de commutation, le circuit de commande comportant des moyens de mémoire, caractérisé en ce qu'une mémoire est associée à chaque paire d'organes de commutation pour mémoriser l'actionnement du premier d'entre eux dans un second état dans lequel elle commande ledit moteur dans le sens correspondant, et pour être rétablie dans un premier état lorsque le second organe de commutation est actionné durant la marche du moteur en mode automatique.

Il résulte de ces caractéristiques que le second organe de commutation annule à tout moment le fonctionnement en mode automatique du circuit de sorte que l'utilisateur peut reprendre lui-même la commande et placer le panneau dans la position désirée.

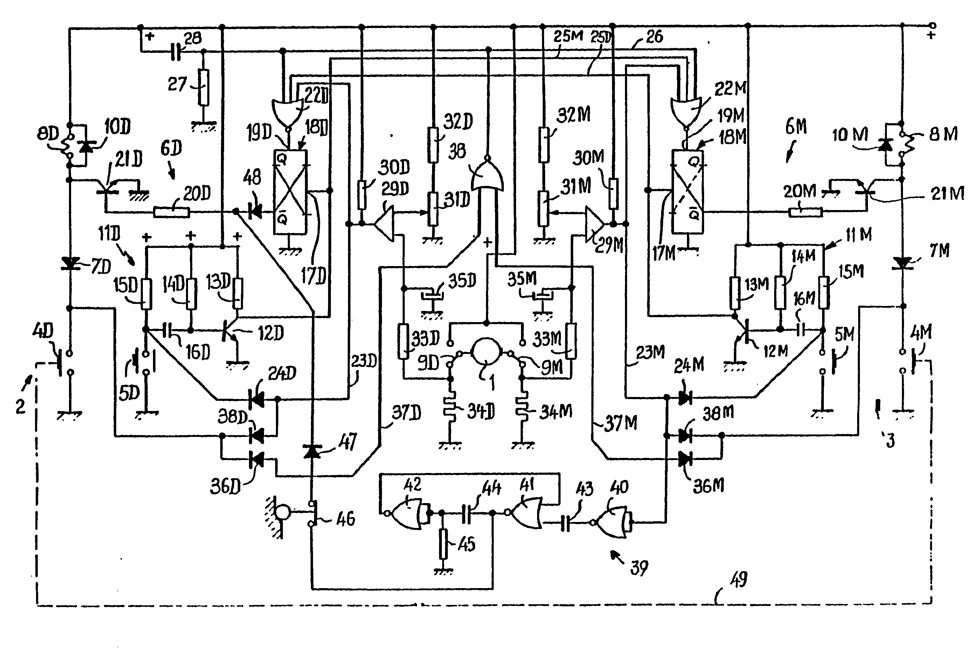

L'invention sera mieux comprise à l'aide de la description qui va suivre d'un exemple de réalisation, donnée uniquement à titre d'exemple et faite en se référant au dessin annexé sur lequel:

- la Figure unique montre un circuit de commande suivant l'invention.

En se référant maintenant à cette figure, on voit que le circuit de commande suivant l'invention est connecté à un moteur électrique 1 qui, par un mécanisme non représenté et connu, est capable d'entraîner un panneau de véhicule automobile, tel que par exemple une vitre ou le toit ouvrant. Ce moteur qui est à courant continu peut être commandé dans les deux sens. Dans l'exemple décrit ici, on suppose qu'il s 'agit d'une vitre et que le circuit de commande appartient donc à un lève-vitre pouvant provoquer la descente et la montée de cette vitre. Le circuit comprend deux jeux 2 et 3 d'organes de commutation affectés respectivement à chaque sens de marche du moteur 1 et comprenant chacun un bouton 4M et 4D de mode manuel et un bouton 5M ou 5D de mode automatique, ces boutons étant de préférence prévus à un endroit facilement accessible pour l 'utilisateur dans le véhicule, c'està-dire sur le tableau de bord ou sur la portière elle même. Les organes de commutation sont reliés respectivement à une section de montée 6M et à une section de descente 6D du circuit de commande.

On va maintenant décrire la section 6M étant entendu que la section de descente 6D comporte, d'une façon générale, les mêmes composants agencés de la même façon et désignés par les mêmes références numériques affectées de la lettre D au lieu de la lettre M. Cependant, dans la suite de la description, les références numériques dépourvues de suffixe M ou D sont supposées être des organes communs aux sections 6M et 6D ou des composants indépendants.

On voit que le bouton 4M de commande du mode manuel est relié entre la masse et la cathode d'une diode 7M dont l'anode est reliée à la bobine 8M d'un relais électro-mécanique, elle même reliée à la borne de tension positive d'une source d'alimentation (non représentée). La bobine de relais 8M commande un contact inverseur 9M relié à l'induit du moteur d'entraînement 1. Une diode 10M est montée en parallèle sur la bobine 8M.

Le bouton 5M de commande en mode automatique est relié entre la masse et l'entrée d'un circuit de mise en forme 11M comportant un transistor 12M dont la base est reliée au bouton 5M, dont l'émetteur est relié à la masse et dont le collecteur est connecté par une résistance 13M à la borne de tension positive. La base du transistor est reliée par une résistance 14M à cette même borne laquelle est également reliée une résistance 15M dont l'extrémité opposée est reliée au bouton de commande 5M. Un condensateur 16M est branché entre la base du transistor 12M et le bouton 5M.

Le collecteur du transistor 12M est relié à l'entrée de commande 17M d'une mémoire 18M à deux états qui, dans le mode de réalisation représenté, est une bascule JK. L'entrée de commande 17M de cette mémoire permet de la placer successivement dans un second état dans lequel sa sortie $\bar{Q}$ est portée au niveau haut et dans un premier état dans lequel cette sortie est au niveau bas tandis que sa sortie Q̄ est au niveau haut (non utilisée dans le montage décrit ici). En outre, la mémoire peut être placée dans son premier état par l'activation d'une entrée 19M. La sortie Q̄ est reliée à travers une résistance 20M à un transistor 21M dont le circuit collecteur-émetteur est relié entre la masse et la jonction entre l'anode de la diode 7M et la bobine 8M.

L'entrée 19M de la mémoire 18M est connectée à la sortie d'une porte OU 22M Cette porte qui comprend trois entrées est donc capable de remettre la mémoire 18M dans son premier état en présence de l'un des trois signaux d'entrée appliqués à ses entrées. Une première entrée est reliée par un conducteur 23M et une diode 24M (sens passant), à la jonction entre la résistance 15M et le bouton de commande 5M. La seconde entrée est reliée par un conducteur 25M à l'entrée 17D de la mémoire 18D. La troisième entrée est reliée par un conducteur 26 à un montage RC composé d'une résistance 27 reliée à la masse et d'un condensateur 28 relié à la borne positive de la source de tension d'alimentation.

La ligne 23M est reliée en outre, à la sortie d'un amplificateur-comparateur 29M connecté par une résistance 30M à la borne positive de tension d'alimentation. Le comparateur 29M comprend une première entrée qui est reliée au curseur d'un potentiomètre 31M faisant partie d'un diviseur de tension qui est relié entre la borne positive de la source d'alimentation et la masse et qui comprend également une résistance fixe 32M.

L'autre entrée du comparateur 29M est connectée par une résistance 33M à l'un des contacts fixes de l'inverseur 9M et à une résistance 34M de mesure d'intensité, reliée par ailleurs à la masse. Cette entrée est également reliée à la masse par l'intermédiaire d'un condensateur 35M.

La jonction entre le bouton 4M et la cathode de la diode 7M est reliée par une diode 36M (sens bloquant) à une ligne 37M qui mène à l'une des entrées d'une porte NON-ET 38 dont la sortie est connectée à la ligne 26. L'autre entrée de cette porte 38 est connectée à la diode 36D par la ligne 37D.

Par ailleurs, il est prévu une diode 38M entre la cathode de la diode 7M et l'entrée d'un circuit anti-coincement 39 qui est continué par une bascule monostable composée de portes NON-ET 40, 41 et 42, de condensateurs 43 et 44 et d'une résistance 45, le temps de basculement de ce monostable étant déterminé par le condensateur 44 en combinaison avec la résistance 45. La sortie du circuit anti-coincement 39 est relié par l'intermediaire d'un interrupteur 46 et d'une diode 47 (sens passant) à la jonction entre la résistance 20D et une diode 48 qui dans la section 6D est interposée entre la sortie Q̄ de la mémoire 18D et la résistance 20D. Il est à noter que l'interrupteur 46 peut par exemple être monté dans le cadre de la portière et plus précisément dans la partie haute de celui-ci.

Dans le cas d'un lève-vitre à câble du type décrit à la demande de brevet FR n° 82 16 828 déposée le 7 Octobre 1982 par la Demanderesse, cet interrupteur peut être placé sur le mécanisme du lève-vitre lui-même. Cet interrupteur s'ouvre lorsque la vitre a atteint sa position de fermeture totale.

Le fonctionnement de ce circuit est le suivant.

### 1 - Fonctionnement manuel

Lorsque l'utilisateur appuie sur le bouton 4M, la bobine 8M est excitée et le moteur 1 est alimenté dans le sens de la montée par l'intermédiaire de l'inverseur 9M - La durée de l'action sur le bouton détermine la distance de déplacement du panneau de sorte que l'utilisateur peut placer celui-ci dans une position quelconque désirée. Le même fonctionnement est obtenu dans le sens de la descente en actionnant le bouton 4D.

Il est à noter que l'on peut commander un seul sens de rotation du moteur seulement car les boutons 4M et 4D sont pourvus d'un dispositif de verrouillage mécanique empêchant que les deux boutons soient actionnés en même temps. Ce verrouillage a été symbolisé sur la figure par la ligne en pointillé 49.

### 2 - Fonctionnement automatique

Lorsque la tension d'alimentation est appliquée à la borne d'alimentation positive les mémoires 18M et 18D sont remises à l'état initial (premier état) par l'intermédiaire du condensateur 28, de la résistance 27 et des portes OU respectives 22M et 22D.

Dans ces conditions, en supposant qu'à cet instant la vitre est ouverte et que l'utilisateur appuie sur le bouton 5M il engendre une impulsion de commande qui est mise en forme dans le circuit 11M et qui est appliquée à l'entrée 17M sous une forme prédéterminée d'amplitude et de durée fixes. De ce fait, la mémoire 18M bascule dans son second état et porte donc la sortie Q̄ au niveau haut. Il en résulte que le transistor 21M est rendu conducteur et la bobine 8M excitée. Le contact inverseur 9M bascule et le moteur 1 est alimenté dans le sens de la montée.

La bobine 8M reste excitée tant que la memoire 18M n'est pas remise dans son état initial.

Plusieurs phénomènes peuvent entraîner ce basculement de la mémoire 18M.

a - Lorsque l'utilisateur actionne le bouton 4M pendant la marche du moteur 1, cette commande presente une priorité supérieure à la commande automatique déterminée par l'état de la mémoire 18M. En effet, du fait de l'actionnement du bouton 4M, l'entrée correspondante de la porte NON-ET 38 est reliée à la masse à travers la diode 36M de sorte que la mémoire est remise à son état initial par l'intermédiaire de la ligne 26 et de l'entrée correspondante de la porte OU 22M.

b - Lorsque la vitre atteint sa position haute de fin de course, le courant absorbé par le moteur 1 devient supérieur à une valeur prédéterminée, ce qui est détecté par le comparateur 29M à l'aide de la résistance de détection 34M. La tension aux bornes de cette dernière est comparée à la tension de référence engendrée sur le curseur du potentiomètre 31M et lorsque le comparateur constate que cette tension est supérieure à la valeur predéterminée, sa sortie passe au niveau haut et transfère cette commande à travers la porte 22M sur l'entrée 19M de la mémoire 18M. Il en résulte la remise à l'état initial de cette mémoire et la désexcitation la bobine 18M.

c - Toute action sur un bouton de commande visant à déclencher un mouvement opposé, est transféré dans le même sens à travers la porte OU 22M par l'intermédiairé des conducteurs 25M et 25D.

d - Si l'utilisateur appuie sur le bouton 5M pendant la montée, la mémoire bascule également dans sa position initiale puisque la bascule utilisée pour cette mémoire est du type JK et se comporte donc comme un diviseur par deux de la fréquence des impulsions qui lui sont appliquées.

Le fonctionnement que l'on vient de décrire peut être appliqué à l'identique à la section 6D du montage lorsque l'on appuie sur les boutons 4D et 5D.

## 3 - Démarrage du moteur

Pour éviter que la détection de courant effectué par les résistances 34M et 34D ne provoque l'arrêt immédiat du moteur lors de son démarrage par suite de l'appel de courant qui se produit alors inévitablement, l'action du comparateur 29M ou 29D est momentanément neutralisée tant que les boutons correspondants 5M ou 5D sont actionnés. En effet, ces boutons relient à la masse la sortie du comparateur correspondant.

## 4 - Anti-coincement

Lorsqu'un obstacle se place entre la vitre et le cadre de la portière lors de la montée, l'intensité du courant absorbé par le moteur 1 se traduit par une augmentation de la tension appliquée à l'entrée correspondante du comparateur 29M et lorsque cette tension dépasse la tension de référence engendrée sur le curseur du potentiomètre 31M, le comparateur 29M fournit un signal de sortie. L'impulsion correspondante est appliquée au circuit monostable 39 qui en basculant applique une tension de commande au transistor 21D pour exciter la bobine 8D. Le moteur est donc inversé et continu à tourner tant que le monostable 39 n'a pas retrouvé son état initial la période de temps de descente étant déterminé par la valeur RC du condensateur 44 et de la résistance 45. Bien entendu, l'action du monostable 39 est neutralisée lorsque la vitre se trouve en fin de course haute grâce à la présence de l'interrupteur 46.

## 5 - Anti-agression

Lorsque l'utilisateur, en cas d'agression, maintient son action sur le bouton 4M ou 5M, le moteur reste alimenté dans le sens de la montée. En effet, si le bouton 4M reste fermé, la bobine 8M reste excitée. Cependant, si le bouton 5M reste fermé, l'action du comparateur 29M est neutralisée comme on vient de le voir.

## 6 - Résistances de mesure 34M et 34D

Conformément à une caractéristique avantageuse de l'invention, le montage que l'on vient de décrire comporte deux résistances de mesure de l'intensité du courant absorbé par le moteur 1. Par ailleurs, le circuit présente deux comparateurs et deux diviseurs de tel sorte que l'on peut ajuster facilement des valeurs limites différentes de cette intensité à la montée et à la descente. Une telle détection séparée permet de se libérer des différences de consommation du moteur 1 en mode montée et en mode descente.

Il résulte de ce qui précède que dans tous les cas, tant en montée qu'en descente, les boutons 4M et 4D de commande manuelle ont une priorité sur le processus automatique déclenché respectivement par les boutons 5M et 5D. Par ailleurs, seulement dans le cas de la montée automatique, lorsque le panneau rencontre un obstacle avant la fin de course haute, donc avant l'ouverture de l'interrupteur 46, le circuit inverse l'alimentation du moteur et fait reculer le panneau pendant un temps prédéterminé fixé dans le monostable 39.

## Revendication

1. Circuit de commande du moteur d'entraînement d'un panneau ouvrant pour véhicule automobile tel qu'une vitre ou un toit ouvrant, du type comprenant respectivement pour chaque sens de marche du moteur (1), en vue de l'ouverture ou de la fermeture du panneau deux organes de commutation (4M, 4D, 5M, 5D) dont le premier (5M, 5D) est destiné à la commande d'un cycle automatique de marche couvrant normalement la course totale du panneau et dont le second (4M, 4D) est destiné à la commande d'un cycle manuel permettant de placer sélectivement le panneau dans une position quelconque de sa course en fonction de la durée d'actionnement du second organe de commutation, le circuit de commande comportant des moyens de mémoire, caractérisé en ce qu'une mémoire (18M, 18D) est associée à chaque paire d'organes de commutation pour mémoriser l'actionnement du premier d'entre eux dans un second état dans lequel elle commande ledit moteur (1) dans le sens correspondant et pour être rétablie dans un premier état de coupure dudit moteur lorque le second organe de commutation (4M, 4D) est actionné durant la marche du moteur en mode automatique.

2. Circuit de commande suivant la revendication 1, caractérisé en ce que chaque mémoire (18M, 18D) est connectée en outre à un circuit de commande d'arrêt (34M, 34D, 29M, 29D, 31M, 31D) capable de rétablir ladite mémoire dans son premier état lorsque l'intensité du courant dans le moteur dépasse une valeur prédéterminée.

3. Circuit de commande suivant l'une quelconque des revendications 1 et 2, caractérisé en ce que chaque mémoire (18M, 18D) est en outre connectée au premier organe de commutation (5M, 5D) associé à l'autre mémoire pour être remise dans son état initial lorsque cet organe de commutation est actionné.

4. Circuit de commande suivant l'une quelconque des revendications 1 à 3, caractérisé en ce que chaque mémoire (18M, 18D) est une bascule bistable.

5. Circuit de commande suivant la revendication 4, caractérisé en ce que ladite bascule (18M, 18D) est du type J.K.

6. Circuit de commande suivant la revendication 5, caractérisé en ce que l'une des sorties de la bascule (18M, 18D) activée dans ledit second état est connectée à une bobine de relais (8M, 8D) commandant un organe de commutation (9M, 9D) associé au moteur (1).

7. Circuit de commande suivant la revendication 6, lorsqu'elle dépend des revendications 1 à 3 prises ensemble, caractérisé en ce que l'entrée de commande (19M, 19D) de chaque bascule est reliée à une porte OU (22M, 22D) dont une première entrée est reliée au circuit de commande d'arrêt correspondant (34M, 34D, 29M, 29D, 31M, 31D) et dont une seconde entrée est reliée à la sortie d'une porte (38) à combinaison logique OU qui est ouverte lorsque l'un ou l'autre des seconds organes de commutation (4M, 4D) est actionné.

8. Circuit de commande suivant la revendication 7, caractérisé en ce que chaque porte OU (22M, 22D) comporte une troisième entrée reliée à un circuit RC (27, 28) assurant la remise de chaque mémoire (18, 18D) dans son premier état lorsque le circuit est mis sous tension.

9. Circuit de commande suivant l'une quelconque des revendications 2 à 8, caractérisé en ce qu'il comprend un circuit anti-coincement (39) capable de commander le moteur (1) dans le sens de l'ouverture pendant une période de temps prédéterminée (circuit RC 44, 45), lorsque le circuit de commande d'arrêt d'ouverture (34M, 29M, 31M) fournit un signal de sortie pendant que le premier organe de commutation (5M) pour l'ouverture est actionné.

10. Circuit de commande suivant la revendication 9, caractérisé en ce que le circuit anti-coincement (39) comporte un monostable déclenché par la sortie dudit signal de commande d'arrêt (34M, 29M, 31M) et connecté à travers un interrupteur (46) de détection de fin de course de fermeture à l'organe de commande d'ouverture (8D, 9D).

**Patentansprüche**

1. Steuereinrichtung eines Motors zur Öffnung einer Fläche eines Kraftfahrzeugs, z. B. einer Scheibe oder einem Schiebedach mit zwei Kommutatoren (4M, 4D, 5M, 5D) für jeden Drehsinn des Motors (1) zum Öffnen und zum Schließen der Fläche, wobei der erste Kommutator (5M, 5D) dazu bestimmt ist, einen automatischen Arbeitszyklus zu steuern, der normalerweise den gesamten Hub der Fläche abdeckt und wobei der zweite Kommutator (4M, 4D) dazu bestimmt ist, einen manuellen Arbeitszyklus zu steuern, mit dem wahlweise die Fläche in eine bestimmte Position ihres Hubes in Abhängigkeit von der Dauer der Betätigung des zweiten Kommutators gebracht werden kann und wobei die Steuerschaltung Speicher aufweist, dadurch gekennzeichnet, daß mit jedem Kommutatorpaar ein Speicher (18M, 18D) verbunden ist, um die Betätigung des ersten unter ihnen in einen zweiten Zustand abzuspeichern, in dem er den Motor (1) in der entsprechenden Richtung steuert und um in einen ersten Zustand zurückgestellt zu werden, in dem die Motorspeisung unterbrochen ist, während der zweite Kommutator (4M, 4D) während des Betriebs des Motors in der automatischen Phase betätigt wird.

2. Steuereinrichtung nach Anspruch 1, dadurch gekennzeichnet, daß jeder Speicher (18M, 18D) außerdem an einer Haltesteuerschaltung (34M, 34D, 29M, 29D, 31M, 31D) geschaltet ist, mit der der Speicher in seinen ersten Zustand zurückversetzt werden kann, während die Stromstärke im Motor einen vorbestimmten Wert übersteigt.

3. Steuereinrichtung nach einem der Ansprüche 1 und 2, dadurch gekennzeichnet, daß jeder Speicher (18M, 18D) außerdem mit einem ersten Kommutator (5M, 5D) verbunden ist, der mit dem anderen Speicher verbunden ist, um in seinen Ausgangszustand zurückversetzt zu werden, wenn dieses Organ betätigt wird.

4. Steuereinrichtung nach einem der Ansprüche 1 bis 3, dadurch gekennzeichnet, daß jeder Speicher (18M, 18D) eine bistabile Kippschaltung ist.

5. Steuereinrichtung nach Anspruch 4, dadurch gekennzeichnet, daß die Kippschaltung (18M, 18D) eine J. K.-Kippschaltung ist.

6. Steuereinrichtung nach Anspruch 5, dadurch gekennzeichnet, daß einer der Ausgänge der Kippschaltung (18M, 18D), der in den zweiten Zustand aktiviert ist, mit einer Relaisspule (8M, 8D) verbunden ist, die ein mit dem Motor (1) verbundenen Kommutator (18M, 18D) steuert.

7. Steuereinrichtung nach Anspruch 6, falls dieser von den Ansprüchen 1 bis 3 zusammen abhängt, dadurch gekennzeichnet, daß der Steuereingang (19M, 19D) jeder Kippschaltung mit einem ODER-Gatter (22M, 22D) verschaltet ist, dessen erster Eingang an eine entsprechende Stop-Steuerschaltung (34M, 34D, 29M, 29D, 31M, 31D) angeschlossen ist und deren zweiter Eingang an den Ausgang eines logischen ODER-Gatters (38) geschaltet ist, das geöffnet ist, wenn einer der beiden Kommutatoren (4M, 4D) betätigt wird.

8. Steuereinrichtung nach Anspruch 7, dadurch gekennzeichnet, daß jedes ODER-Gatter (22M, 22D) einen dritten Eingang aufweist, der mit einer RC-Schaltung (27, 28) verbunden ist, die die Rückstellung jedes Speichers (18, 18D) in seinen ersten Zustand sicherstellt, wenn diese Schaltung unter Spannung gesetzt wird.

9. Steuereinrichtung nach einem der Ansprüche 2 bis 8, gekennzeichnet durch eine Anti-Koinzidenzschaltung (39), die den Motor (1) in der Öffnungsdrehrichtung während einer vorbestimmten Zeit steuern kann (RC-Schaltung 44, 45), während die Steuerschaltung zum Anhalten des Öffnens (34M, 29M, 31M) ein Ausgangssignal liefert, während der erste Kommutator (5M) zum Öffnen betätigt ist.

10. Steuereinrichtung nach Anspruch 9, dadurch gekennzeichnet, daß die Anti-Koinzidenzschaltung (39) ein monostabiles Glied aufweist, das von dem Ausgang zum Steuern des Anhaltens (34M, 39M, 31M) aktiviert wird und das über einem Endschalter (46) zum Erfassen des Hubendes des Schließens an ein Öffnungssteuerungsglied (8D, 9D) angeschlossen ist.

## Claims

1. A control circuit for a motor driving an openable panel for an automobile vehicle, such as a window glass or an openable roof, of the type comprising, respectively for each direction of operation of the motor (1), for the purpose of opening or closing the panel, two switching means (4M, 4D, 5M, 5D), of which the first (5M, 5D) is adapted to control an automatically operating cycle normally covering the total travel of the panel, and the second (4M, 4D) is adapted to control a manual cycle for selectively placing the panel in any position of its travel as a function of the duration of actuation of the second switching means, the control circuit comprising memory means, characterized in that a memory (18M, 18D) is associated with each pair of switching means for storing in memory the actuation of the first thereof in a second state in which it causes actuation of said motor (1) in the corresponding direction and for being reestablished in a first state of the stopping of said motor when the second switching means (4M, 4D) is actuated during the operation of the motor in the automatic mode.

2. A control circuit according to claim 1, characterized in that each memory (18M, 18D) is further connected to a stop control circuit (34M, 34D, 29M, 29D, 31M, 31D) capable of reestablishing said memory in its first state when the magnitude of the current in the motor exceeds a predetermined value.

3. A control circuit according to claim 1 or 2, characterized in that each memory (18M, 18D) is further connected to the first switching means (5M, 5D) associated with the other memory so as to be put back into its initial state when this switching means is actuated.

4. A control circuit according to any one of the claims 1 to 3, characterized in that each memory (18M, 18D) is a flip-flop.

5. A control circuit according to claim 4, characterized in that said flip-flop (18M, 18D) is of the J.K. type.

6. A control circuit according to claim 5, wherein one of the outputs of the flip-flop (18M, 18D) activated in said second state is connected to a relay coil (8M, 8D) controlling a switching means (9M, 9D) associated with the motor (1).

7. A control circuit according to claim 6 when it depends from claims 1 to 3 taken together, characterized in that the control input (19M, 19D) of each flip-flop is connected to an OR gate (22M, 22D) whose first input is connected to the corresponding stop control circuit (34M, 34D, 29M, 29D, 31M, 31D) and whose second input is connected to the output of a gate (38) having an OR logic combination which is opened when one or the other of the second switching means (4M, 4D) is actuated.

8. A control circuit according to claim 7, characterized in that each OR gate (22M, 22D) comprises a third input connected to an RC circuit (27, 28) putting each memory (18, 18D) back into its first state when the circuit carries current.

9. A control circuit according to any one of the claims 2 to 8, characterized in that it comprises an anti-jamming circuit (39) capable of causing the actuation of the motor (1) in the opening direction during a predetermined period of time (RC circuit 44, 45), when the stop opening control circuit (34M, 29M, 31M) delivers an output signal while the first switching means (5M) for the opening is actuated.

10. A control circuit according to claim 9, characterized in that the anti-jamming circuit (39) comprises a monostable circuit triggered by the output of said stop control signal (34M, 29M, 31M) and connected to the opening control means (8D, 9D) through a switch (46) detecting the end of the closing travel.

0 131 489